**Europäisches Patentamt**

**European Patent Office**

**Office européen des brevets**

(19)

(11) Veröffentlichungsnummer: **0 278 014 B1**

## (12) EUROPÄISCHE PATENTSCHRIFT

(45) Veröffentlichungstag der Patentschrift: **27.12.91**

(51) Int. Cl.⁵: **B60R 1/06**

(21) Anmeldenummer: **87101644.0**

(22) Anmeldetag: **06.02.87**

(54) **Aussenspiegel für ein Fahrzeug mit mechanisch verstellbarem Spiegel.**

(43) Veröffentlichungstag der Anmeldung:
**17.08.88 Patentblatt 88/33**

(45) Bekanntmachung des Hinweises auf die
Patenterteilung:
**27.12.91 Patentblatt 91/52**

(84) Benannte Vertragsstaaten:
**AT BE CH DE ES FR GB IT LI LU NL SE**

(56) Entgegenhaltungen:
EP-A- 0 045 635    EP-A- 0 073 289
EP-A- 0 186 366    DE-U- 7 219 926
DE-U- 7 801 036    GB-A- 1 543 818
US-A- 4 636 045

(73) Patentinhaber: **HOHE KG**
**Hauptstrasse 36**
**W-6981 Collenberg(DE)**

(72) Erfinder: **Seitz,Edwin**
**Pfarrer-Nicolai-Str. 2**
**W-6981 Collenberg(DE)**

(74) Vertreter: **Zinngrebe, Horst, Dr.rer.nat.**
**Saalbaustrasse 11**
**W-6100 Darmstadt(DE)**

## Beschreibung

Die Erfindung betrifft einen Außenspiegel für ein Fahrzeug mit einem am Fahrzeug befestigbaren Spiegelfuß und einem Spiegelgehäuse, welches um ein am Spiegelfuß ausgebildetes Gelenk aus einer Gebrauchslage klappbar am Spiegelfuß befestigt ist und einen Spiegel trägt, der um zwei zueinander senkrechte, zum Spiegel parallele Achsen verschwenkbar ist, wobei ein am Spiegel angreifender Verstellmechanismus einen im Spiegelfuß beweglich gelagerten und mit einer in das Innere des Fahrzeuges reichenden Handhabe versehenen Hebel aufweist, der mit einem sich durch das Gelenk in das Innere des Spiegelgehäuses erstreckenden und am Spiegel außerhalb des Kreuzungspunktes der Achsen verschieblich befestigten stangenförmigen Übertragungsorgan gelenkig verbunden ist.

Der aus der Gebrauchsmusterschrift DE-U-7 806 907 bekannte Außenspiegel für ein Kraftfahrzeug enthält einen um zwei zueinander senkrechte und in der Spiegelebene liegende Achsen verstellbaren Spiegel. Dazu ist eine Wippe vorgesehen, von der zwei gegenüberliegende Zapfen in je einem mit dem Boden des Spiegelgehäuses verbundenen Bock und zwei dazu querliegenden Zapfen an einem mit dem Spiegel verbundenen Träger gelagert sind. Um eine allseitige Verstellbarkeit des Spiegels um die genannten Achsen zu gewährleisten, sind am Träger die Enden dreier Bowdenzüge eingehängt, die sich durch den Fuß des Außenspiegels, an welchem das Spiegelgehäuse schwenkbar gelagert ist, erstrecken. Die handgriffseitigen Enden der ummantelten Bowdenzüge sind mit einer Übersetzungsvorrichtung verbunden, welche die von einer Bedienungsperson veranlaßten Bewegungen des Handgriffs in Druck- und/oder Zugbewegungen der Bowdenzüge überträgt.

Diese vom Inneren eines Fahrzeuges aus betätigbare Verstellvorrichtung für den Spiegel eines Fahrzeugaußenspiegels ist relativ aufwendig und schwergängig, weil die Bowdenzüge durch den Fuß und das Schwenkgelenk zwischen Gehäuse und Fuß nicht hinreichend krümmungsarm geführt werden können.

Aus dem Dokument EP-A-0 186 366 ist gemäß dem Oberbegriff des Anspruchs 1 ein Außenspiegel mit einem Verstellmechanismus bekannt, dessen Spiegel mittels eines in das Fahrzeuginnere reichenden Hebels um die beiden senkrecht zueinander stehenden Achsen verschwenkbar ist. Zur Übertragung der Hebelbewegungen auf den Spiegel ist ein Mechanismus vorgesehen, der allerdings wegen des vor allem sich nach längerem Gebrauch einstellenden erheblichen Totgangs nur eine ungenaue Spiegelverstellung erlaubt, wobei der eingestellte Spiegel vor allem bei schneller Fahrt zum Flattern neigt und dem Fahrer daher kein klares Bild von der Verkehrssituation hinter und neben seinem Fahrzeug vermittelt.

Mit der Erfindung soll daher ein Außenspiegel geschaffen werden, dessen Spiegel sich vom Inneren des Fahrzeuges aus mechanisch leichtgängiger, mit möglichst geringem konstruktivem Aufwand verstellen läßt.

Bei dem eingangs genannten Außenspiegel wird diese Aufgabe erfindungsgemäß dadurch gelöst, daß das spiegelfußseitige Ende des Übertragungsorganes das freie Ende des Hebels mittels einer Gabel umfaßt, und daß das spiegelgehäuseseitige Ende des Übertragungsorganes von einem vom Spiegel rückwärts abstehenden Ansatz kugelig umfaßt ist. Damit sind zur Einstellung nur zwei Bauteile, nämlich der Hebel und das Übertragungsorgan, mit zwei Gelenken, erforderlich, deren Art einen Totgang praktisch ausschließt. Damit gibt der erfindungsgemäße Außenspiegel dem Fahrer in allen auftreten Fahrsituationen ein klares und wackelfreies Bild. Ferner gewährleistet die Erfindung eine feinfühlige Verstellung des Spiegels vom Fahrzeuginneren her, wobei die Verstellrichtung der Handhabe mit der Schwenkrichtung des Spiegels im wesentlichen übereinstimmend bleibt und nur geringer konstruktiver Aufwand erforderlich ist.

Zweckmäßig ist der Ansatz an die Rückseite des Spiegelträgers für den Spiegel angeformt und besitzt ein Auge, in welchem das freie Ende des stangenförmigen Übertragungsorganes gehalten ist. In einer anderen Ausführungsform der Erfindung kann der Ansatz ein Gelenkteil sein, welches an der Rückseite eines Spiegelträgers für den Spiegel beweglich gehalten ist und an dem freien Ende des Übertragungsorganes schwenkbeweglich befestigt ist.

Eine noch genauere Anpassung der Schwenkbewegung des Spiegels an die entsprechenden Verstellbewegungen der Handhabe wird in Weiterbildung der Erfindung dadurch erreicht, daß das Übertragungsorgan eine ballige Verdickung aufweist, welche in einem am Spiegelgehäuse befestigten Führungsteil in Richtung der Klappachse des Spiegelgehäuses verschiebbar und drehbar gehalten ist. Dabei kann die Gabel, die das abgeplattete Ende des Hebels umgreift, vorteilhafterweise mit diesem über einen sich quer zum Hebel und zum Übertragungsorgan erstreckenden Gelenkstift verbunden sein.

In Weiterbildung der Erfindung ist vorgesehen, daß der Spiegel an einem Spiegelträger befestigt ist, welcher in wenigstens einer weiteren Gabel relativ zu dem Spiegelgehäuse geführt ist, wobei dann bevorzugt diese Gabel aus einer an dem Spiegelgehäuse befestigten Halteplatte vorsteht, in welcher ein am Spiegel befestigter Bügel geführt ist. Bevorzugt besteht die weitere Gabel aus der Spiegelrückseite nach rückwärts vor und weist eine den Spiegel tragende Gelenkkugel auf, aus der seitlich ein in der weiteren Gabel geführter Zapfen vorsteht. Schließlich empfiehlt es sich, den Hebel zweckmäßig in einem Schlitz zu führen.

Nachstehend wird die Erfindung an zwei Ausführungsbeispielen anhand der beigefügten Zeichnungen im einzelnen erläutert.

Es zeigen:

Fig. 1: eine Ansicht eines Außenspiegels, teilweise im Schnitt, in Fahrtrichtung;

Fig. 2: eine schematische Schnittansicht längs der Linie A-A aus Fig. 1;

Fig. 3: eine schematische Schnittansicht längs der Linie B-B aus Fig. 1;

Fig. 4: eine der Fig. 1 ähnliche Darstellung einer anderen Ausführungsform eines Außenspiegels;

Fig. 5: eine schematische Schnittansicht längs der Linie A-A aus Fig. 4;

Fig. 6: eine schematische Schnittansicht längs der Linie B-B aus Fig. 4.

Die Erfindung wird hier erläutert anhand eines linken Außenspiegels für einen Personenkraftwagen, ohne indes auf diese Verwendungsart beschränkt zu sein. Der Spiegelfuß 1 besitzt eine der Fahrzeugkarosserie angepaßte Montageplatte 2, von deren unterem Rand ein hohl ausgeführter Spiegelfuß 3 seitlich absteht. Der mit einer Kunststoffkappe 4 von unten verschlossene Hohlraum 5 des Spiegelfußes 3 besitzt eine Öffnung 6, die bei an das Fahrzeug anmontiertem Spiegel mit einer in das Innere des Fahrzeugs führenden Öffnung fluchtet. Die Öffnung 6 erweitert sich zum Hohlraum 5 über eine Schulter 7. Vom Hohlraum 5 aus ist in die Öffnung 6, sich an der Schulter 7 abstützend, ein Kunststofflager 8 für eine Kugel 9 eines Hebels 10 eingesetzt, z.B. eingeklebt. In der für das Verständnis der Erfindung vereinfachten Darstellungsweise ist der von der Kugel 9 ausgehende und sich durch die Öffnung 6 aus dem Spiegelfuß 3 heraus erstreckende Arm 11 zu einer abgekröpften, sich in das Innere des Fahrzeugs erstreckenden Handhabe 12 verlängert. Alternativ kann der Arm 11 auch geradlinig sich in das Fahrzeuginnere erstrecken und am freien Ende einen abgewinkelten Griff 13 tragen.

Von dem dem Arm 11 gegenüberliegenden Teil der Kugel 9 ausgehend besitzt der Hebel 10 einen sich in den Hohlraum 5 erstreckenden , mit dem Arm 11 fluchtenden weiteren Hebelarm 14, der an seinem freien, unter einem Gelenk 15 befindlichen Ende abgeplattet ist.

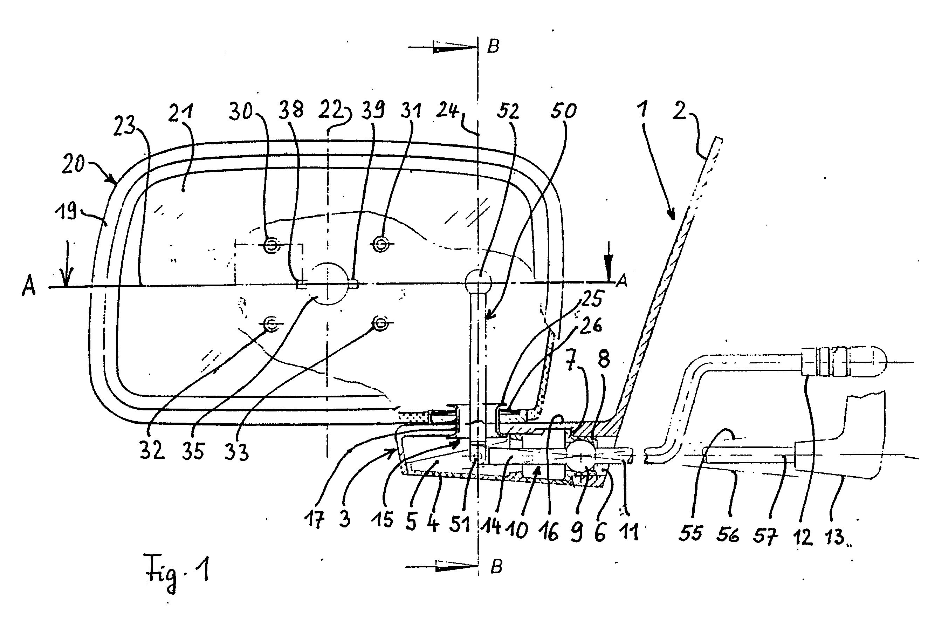

Das in Fahrrichtung bauchige und gegen Fahrtrichtung offene Spiegelgehäuse 20 umgibt mit seinem im wesentlichen rechtwinkligen Rand 19 mit gerundeten Ecken einen Spiegel 21, der in noch zu beschreibender Weist an der Innenseite des Bodens 18 des Spiegelgehäuses 20 schwenkbeweglich gehalten ist. Das Spiegelgehäuse 20 ist an seinem unteren, dem Spiegelfuß 1 benachbarten Abschnitt über des Gelenk 15 mit dem Spiegelfuß 3 gekoppelt und um eine Klappachse 24 aus der in den Fig. 1 bis 3 dargestellten Gebrauchslage in an sich bekannter Weise an die Karosserie des Fahrzeugs anklappbar. Dazu durchdringt ein Hohlniet 25 eine Öffnung in der flachen Oberseite 16 des Spiegelfußes 3 sowie eine Öffnung im Spiegelgehäuse 20 und unterfaßt den inneren Rand der Spiegelfußöffnung 17 mit seinem umgebördelten Rand. Der ebenfalls umgebördelte, in das Innere des Spiegelgehäuses 20 ragende Rand des Hohlniets 25 wird von einer Tellerfeder 26 untergriffen, welche sich auf der Innenseite des Spiegelgehäuses 20 abstützt. Die Achse des Hohlniets 25 definiert die Klappachse 24 für das Spiegelgehäuse 20. Nicht dargestellt sind Rasten, die das Spiegelgehäuse 20 in der gezeigten Gebrauchslage halten und deren Widerstand zum Anklappen des Spiegelgehäuses 20 überwunden werden muß.

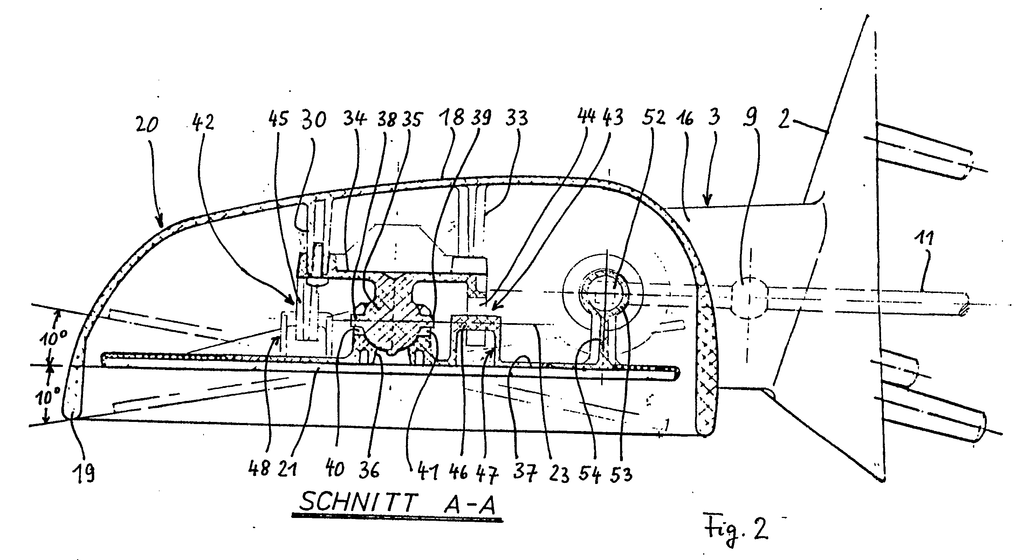

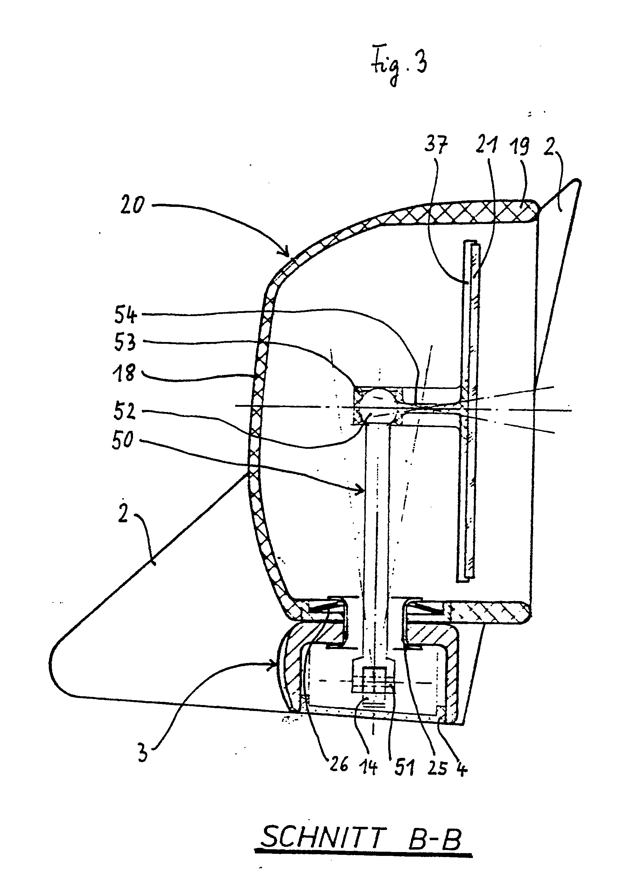

Aus der Mitte der Innenseite des Spiegelgehäusebodens 18 stehen vier Pfosten 30, 31, 32, 33 vor, die an das aus hartem Kunststoff bestehende Spiegelgehäuse 20 angeformt sind und gemeinsam eine auf sie aufgeschraubte Halteplatte 34 tragen. Die Anordnung und Anzahl der Pfosten unterliegt keinen Beschränkungen, sie sollen lediglich eine von den Verstellkräften für den Spiegel 21 unbeeinflußte, feste Lage für die Halteplatte 34 gestatten. Aus der Halteplatte 34 steht etwa in der Mitte der vom Rand 19 umschlossenen Öffnung eine Gelenkkugel 35 vor, auf welche ein mittlerer, rückwärtiger Ansatz 36 eines Spiegelträgers 37 aufgeklemmt ist. Auf die Vorderseite des Spiegelträgers 37 ist der Spiegel 21 aufgeklebt. Die Klemmung des Ansatzes 36 auf der Gelenkkugel 35 verhindert einerseits, daß sich der Spiegelträger 37 mit Spiegel unbeabsichtigt von der Gelenkkugel 35 lösen kann, erlaubt jedoch andererseits ein Verschwenken des Spiegels 21 um die durch den Mittelpunkt der Gelenkkugel 35 verlaufenden, zueinander senkrechten Achsen 22 und 23, welche parallel zur Ebene des Spiegels 21 in seiner Mittellage liegen. Die Mittellage des Spiegels 21 ist in den Fig. 2 und 3 ausgezogen dargestellt.

Für den nachstehend erläuterten Verstellmechanismus ist eine Befestigung des Spiegelträgers 37 an der Halteplatte 34 in der Weise wichtig, daß ein Verschwenken des Spiegels 21 um eine zu den beiden Achsen 22 und 23 senkrechte Achse nicht möglich ist. Dies wird beispielsweise dadurch erreicht, daß an die Gelenkkugel 35 zwei gegenüberliegende und in der horizontalen Schwenkachse 23 liegende Zapfen 38, 39 angeformt sind, von denen jeder in einem nach rückwärts offenen, in den Ansatz 36 geschnittenen, im wesentlichen sich horizontal erstreckenden Längsschlitz 40, 41 eingefangen ist. Wie insbesondere aus Fig. 2 zu erkennen ist ermöglichen die Längsschlitze 40, 41 eine Verschwenkung des Spiegels 21 sowohl um die Achse 23 (also ein Verschwenken des Spiegels 21 nach oben und unten) wie auch um die Achse 22 (Verschwenken des Spiegels nach innen der außen), wobei die Zapfen 38, 39 in den Längsschlitzen 40, 41 gleiten.

Alternativ, oder, wie dargestellt, zusätzlich zu den Zapfen 38, 39 kann der Spiegelträger 37 in zwei in Richtung der Achse 23 beabstandeten Gabeln geführt sein. Die beiden Gabeln 42 und 43 sind beiderseits der Gelenkkugel 35 vorgesehen, es würde jedoch auch eine Gabel genügen. Daher wird hier nur die Gabel 43 beschrieben.

Aus der Halteplatte 34 steht oberhalb und unterhalb der Achse 23 je ein Arm vor; in Fig. 2 ist der unterhalb der Achse 23 befindliche Arm 44 der Gabel 43 und der oberhalb der Achse 23 befindliche Arm 45 der Gabel 42 zu erkennen. Die beiden gegenüberliegenden Arme einer Gabel nehmen zwischen sich den Mittelsteg 46 eines in Höhe der Achse 23 aus dem Spiegelträger nach rückwärts vorstehenden Bügels 47, 48 freibeweglich auf. Wie in Fig. 2 zu erkennen ist, verläuft die Achse 23 durch den Mittelsteg 46. Man sieht, daß jede der Gabeln 42, 43 den Spiegel 21 daran hindert, um eine zu den Achsen 22 und 23 senkrechte Achse um die Gelenkkugel 35 zu drehen.

Zum Verstellen des Spiegels 21 um die beiden genannten Achsen 22, 23 ist mit dem abgeplatteten Ende des Armes 14 eine Stange 50 verbunden, die sich axial durch das Hohlniet 25 in der Klappachse 24 erstreckt. Das untere Ende der Stange 50 umgreift das abgeplattete Ende des Armes 15 gabelförmig und ist mit diesem durch einen Gelenkstift 51 verbunden. Der Gelenkstift 51 erstreckt sich quer zum Arm 14 und zur Stange 50. Am oberen Ende läuft die Stange 50 in einer Kugel 52 aus, welche in einem Auge 53 eines Arms 54 drehbar gehalten ist. Der Arm 54 ist an die Rückseite des Spiegelträgers 37 zwischen der Gabel 43 und der spiegelfußnahen Seite des Spiegelträgers 37 angeformt. Es empfiehlt sich, den Arm 54 in Höhe der horizontalen Schwenkache 23 vorzusehen. Das Auge 53 weist ein die Kugel 52 umgebendes Lager aus Kunststoff auf, das eine Drehung der Kugel 52 in dem Lager erlaubt.

Der Verstellmechanismus für den Spiegel 21, der im wesentlichen den Hebel 10, die Stange 50 und den Arm 54 umfaßt, erlaubt eine Verstellung des Spiegels um die Achse 23, die bei an das Fahrzeug anmontiertem Spiegelfuß 1 im wesentlichen horizontal verläuft, und/oder um die Achse 22, die bei anmontiertem Spiegel im wesentlichen vertikal verläuft. Wenn dazu der Griff 13 aus der in Fig. 1 dargestellten Mittellage in der Ebene der Fig.

1 nach oben bewegt wird, bis die Mittellinie des Hebels 10 etwa die bei 55 angedeutete Lage einnimmt, wird die Stange 50 vom Hebel 10 längs der Klappachse 24 nach unten bewegt. Die im Auge 53 eingefangene Kugel 52 zieht das Auge 53 nach unten. Da der Spiegel 21 in den Gabeln 42, 43 eingefangen ist bzw. die Zapfen 38, 39 in den Schlitzen 40, 41 eingefangen sind, kippt der Spiegel 21 um die Achse 23 nach oben. Wird der Griff 13 dagegen in der Ebene der Fig. 1 nach unten etwa bis zu Linie 56 bewegt, wird diese Bewegung vom Hebel 10 in eine Aufwärtsbewegung der Stange 50 längs der Klappachse 24 übertragen, so daß der Spiegel um die Achse 23 nach unten klappt.

Wird der Griff 13 um die Mittellinie 57 des in Mittellage befindlichen Hebels 10 bei Betrachtung der Fig. 1 nach hinten gedreht, wird diese Drehung vermöge der gabelartigen Befestigung der Stange 50 am abgeplatteten Ende des Hebelarms 14 in eine Verschwenkung der Stange 50 aus der Klappachse 24 nach hinten übertragen mit der Folge, daß der Spiegel 21 um die vertikale Achse 22 nach innen, das heißt zum Fahrzeug hin, schwenkt. Dabei bewegen sich die Zapfen 38, 39 innerhalb der Längsschlitze 40, 41 und die Mittelstege 46 zwischen den Armen der Gabeln 41, 43. Wird andererseits der Griff 13 um die Längsachse 57 aus der Ebene der Fig. 1 nach vorne gedreht, schwenkt die Stange 50 aus der Klappachse 24 mit ihrer Kugel 52 nach vorne, so daß der Spiegel 21 um die Achse 22 nach außen, das heißt vom Fahrzeug weg, schwenkt.

Um eine Bewegung des Armes 11 des Hebels 10 senkrecht zur Ebene der Fig. 1 auszuschließen empfiehlt es sich, die Öffnung 6 an ihrem zur Fahrzeugkarosserie weisende Ende in Form eines Schlitzes auszubilden oder durch eine nicht dargestellte, mit Schlitz versehene Kappe einzuengen. Dieser Schlitz ermöglicht dann lediglich eine Drehung des Handgriffs 13 um die Mittellinie des Hebels 10 und eine Bewegung zwischen den Auslenklinien 55, 56. Die Auslenklinien 55, 56 können durch Begrenzung des zuletzt erwähnten Schlitzes definiert sein und schließen einen Winkel ein, der eine Verschwenkung des Spiegels 21 um beispielsweise 10° zu beiden Seiten um die Achse 22 erlaubt.

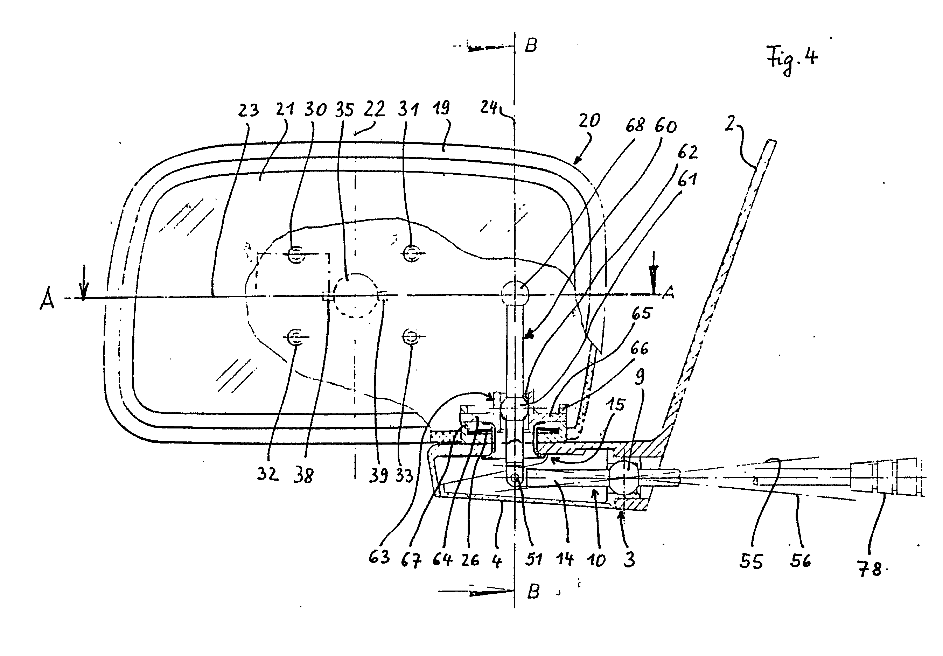

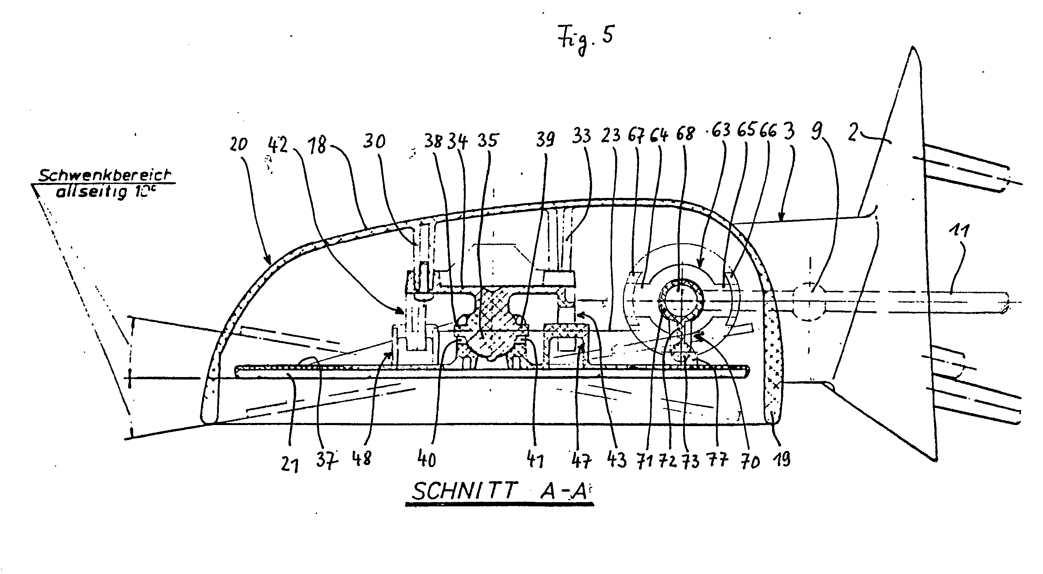

Die Ausführungsform der Erfindung nach den Fig. 4 bis 6 unterscheidet sich dadurch von der vorstehend beschriebenen ersten Ausführungsform, daß die Stange 50 durch eine Stange 60 ersetzt ist, welche kurz oberhalb des Hohlniets 25 eine ballige Verdickung 61 aufweist, die in der Axialbohrung 62 eines Führungsteils 63 drehbar und längs der Klappachse 24 verschiebbar gehalten ist. Das Führungsteil 63 weist zwei gegenüberliegende, radial abstehende Zungen 64, 65 auf, welche an aus dem Spiegelgehäuse 20 vorstehenden Leisten 66, 67 verankert sind. Dazu können die Leisten 66, 67 je einen Schlitz aufweisen, in welchen eine der Zungen 64, 65 eingeführt und eingefangen ist. Jedenfalls ist das Führungsteil 63 an den Leisten 66, 67 unverdrehbar und unverschieblich gehalten.

Weiterhin ist der Arm 54 aus der vorstehend beschriebenen Ausführungsform der Erfindung hier durch ein separates Gelenkteil 70 ersetzt, das die Montage des Spiegels 21 mit Spiegelträger 37 erleichtert. Das Gelenkteil 70 umfaßt die Kugel 68 am oberen Ende der Stange 60 mit einem Auge 71, in welchem die Kugel 68 allseits drehbar eingefangen ist. An das Auge 71 ist über einen abstehenden Steg 72 ein zylindrischer, sich parallel zur Achse des Auges 71 erstreckender Zapfen 73 angeformt. Von der Rückseite das Spiegelträgers 75 stehen zwei vertikal beabstandete, parallele Lappen 76, 77 vor, in deren vertikale fluchtenden Öffnungen das obere und untere Ende des Zapfens 73 drehbar gehalten ist. Die Lappen 76, 77 können elastisch sein, so daß der Zapfen 73 in die Öffnungen einschnappt.

Im übrigen gleicht die Ausführungsform des Außenspiegels nach den Fig. 4 bis 6 derjenigen nach den Fig. 1 bis 3 mit der Maßgabe, daß die Öffnung 6 eine Bewegung des Armes 11 senkrecht zur Ebene der Fig. 4 erlaubt. Im Unterschied zur der ersten Ausführungsform der Erfindung ist eine Drehung des Hebels 10 um seine Mitteachse nicht möglich, weil die Verdickung 61, deren Mitte in der Klappachse 24 liegt, in der Axialbohrung 62 gehalten ist.

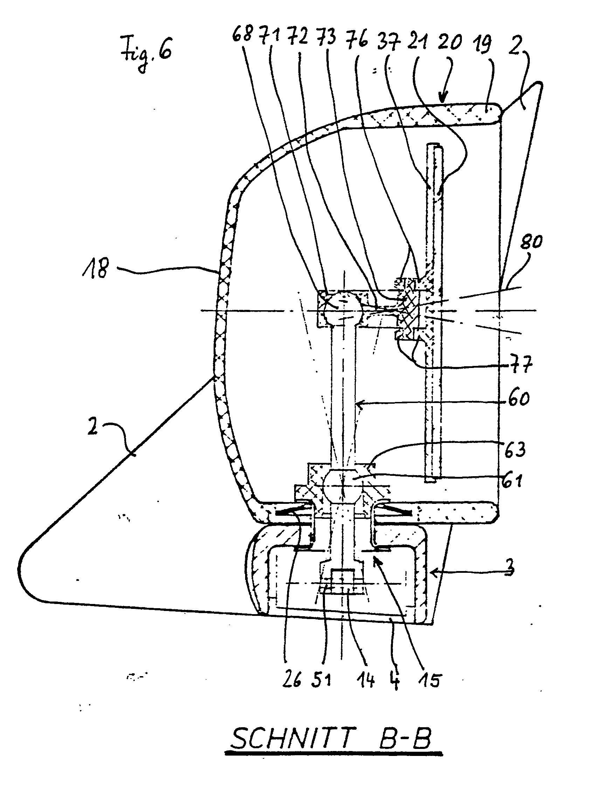

Wird die am freien Ende des Arms 11 befestigte Handhabe 78 in der Ebene der Fig. 4 nach oben bewegt, so daß die Mittellinie des Hebels 10 in der Linie 55 liegt, wird die Stange 60 nach unten gezogen, wobei die Verdickung 61 in der Axialbohrung 62 gleitet. Aufgrund der gabelartigen Führung des Spiegels 21 an der Halteplatte 34 schwenkt der Spiegel 21 um die Achse 23 nach oben. Der Steg 72 erstreckt sich dann etwa längs der Linie 80 aus Fig. 6. Bei Bewegung der Handhabe 78 in der Ebene der Fig. 4 nach unten bis zur Linie 67 verschiebt sich die Stange 60 nach oben, so daß der Spiegel 21 um die Achse 23 nach unten schwenkt.

Wird die Handhabe 78 dagegen aus der Ebene der Fig. 4 nach oben um den Mittelpunkt der Kugel 9 bewegt, dreht die Stange 60 um den Mittelpunkt der Verdickung 61 so, daß die Kugel 68 aus der Ebene der Fig. 4 nach vorne verlagert wird und der Spiegel 21 um die vertikale Achse 22 nach außen schwenkt. Wird dagegen die Handhabe 78 aus der Ebene der Fig. 4 nach hinten bewegt, schwenkt die Stange 60 um den Mittelpunkt der Verdickung 61 so, daß die Kugel 68 hinter die Ebene der Fig. 4 sich verlagert und der Spiegel 21 demzufolge nach innen um die vertikale Achse 22 schwenkt.

## Patentansprüche

1. Außenspiegel für ein Fahrzeug mit einem am Fahrzeug befestigbaren Spiegelfuß (2) und einem Spiegelgehäuse (20), welches um ein am Spiegelfuß (2) ausgebildetes Gelenk (15) aus einer Gebrauchslage klappbar am Spiegelfuß (2) befestigt ist und einen Spiegel (21, 37) trägt, der um zwei zueinander senkrechte, zum Spiegel parallele Achsen (22, 23) verschwenkbar ist, wobei ein am Spiegel angreifender Verstellmechanismus einen im Spiegelfuß (2) beweglich gelagerten und mit einer in das Innere des Fahrzeugs reichenden Handhabe (12, 13) versehenen Hebel (10) aufweist, der mit einem sich durch das Gelenk (15) in das Innere des Spiegelgehäuses (20) erstreckenden und am Spiegel außerhalb des Kreuzungspunktes der Achsen verschieblich befestigten stangenförmigen Übertragungsorgan (50, 60) gelenkig verbunden ist, dadurch gekennzeichnet, daß das spiegelfußseitige Ende des Übertragungsorgans (50, 60) das freie Ende des Hebels (10) mittels einer Gabel umfaßt, und daß das spiegelgehäuseseitige Ende (52, 68) des Übertragungsorgans (50, 60) von einem vom Spiegel rückwärts abstehenden Ansatz (54, 70) kugelig umfaßt ist.

2. Außenspiegel nach Anspruch 1, dadurch gekennzeichnet, daß der Ansatz (54) an die Rückseite eines Spiegelträgers (37) für den Spiegel (21) angeformt ist und ein Auge (53) aufweist, in welchem das freie Ende (52) des Übertragungsorgans (50) gehalten ist.

3. Außenspiegel nach Anspruch 1, dadurch gekennzeichnet, daß der Ansatz ein Gelenkteil (70) ist, welches an der Rückseite eines Spiegelträgers (37) für den Spiegel (21) beweglich gehalten ist und an dem freien Ende (68) des Übertragungsorganes (6) schwenkbeweglich befestigt ist.

4. Außenspiegel nach einem der vorstehenden Ansprüche, dadurch gekennzeichnet, daß das Übertragungsorgan (60) eine ballige Verdickung (61) aufweist, welche in einem am Spiegelgehäuse (20) befestigten Führungsteil (63) in Richtung der Klappachse (24) des Spiegelgehäuses (20) verschiebbar und drehbar gehalten ist.

5. Außenspiegel nach einem der vorstehenden Ansprüche, dadurch gekennzeichnet, daß die Gabel des Übertragungsorganes (50, 60) das abgeplattete Ende des Hebels (10) umgreift und mit diesem über einen sich quer zum Hebel und zum Übertragungsorgan (50, 60) erstreckenden Gelenkstift (51) verbunden ist.

6. Außenspiegel nach einem der vorstehenden Ansprüche, dadurch gekennzeichnet, daß der Spiegel (21) an einem Spiegelträger (37) befestigt ist, welcher in wenigstens einer weiteren Gabel (42, 43; 38, 39, 40, 41) relativ zu dem Spiegelgehäuse (20) geführt ist.

7. Außenspiegel nach Anspruch 6, dadurch gekennzeichnet, daß die weitere Gabel (42, 43) aus einer an dem Spiegelgehäuse befestigten Halteplatte (34) vorsteht, in welcher ein am Spiegel befestigter Bügel (47, 48) geführt ist.

8. Außenspiegel nach Anspruch 6 oder 7, dadurch gekennzeichnet, daß die weitere Gabel (40, 41) aus der Spiegelrückseite nach rückwärts vorsteht und die den Spiegel (21, 37) tragende Gelenkkugel (35) einen seitlich vorstehenden, in der weiteren Gabel geführten Zapfen (38, 39) aufweist.

9. Außenspiegel nach einem der vorstehenden Ansprüche, dadurch gekennzeichnet, daß der Hebel (10) in einem Schlitz geführt ist.

## Claims

1. An exterior mirror for a vehicle comprising a mirror base (2) which may be secured to the vehicle and a mirror housing (20) which is secured to the mirror base (2) so as to be tiltable from a use position around a hinge (15) formed at the mirror base (2) and which bears a mirror (21, 37) which may be swivelled around two axes (22, 23) perpendicular to one another and parallel to the mirror, wherein an adjustment mechanism acting on the mirror has a lever (10) mounted in the mirror base (2) so as to be movable and provided with a handle (12, 13) extending into the interior of the vehicle, which lever is hinged to a rod-shaped transmission element (50, 60) extending through the hinge (15) into the interior of the mirror housing (20) and movably secured to the mirror outside the point of intersection of the axes, characterised in that the end of the transmission element (50, 60) on the mirror base side encloses the free end of the lever (10) by means of a fork, and in that the end (52, 68) of the transmission element (50, 60) on the mirror housing side is spherically enclosed by an attachment (54, 70) projecting rearwards from the mirror.

2. An exterior mirror according to claim 1, characterised in that the attachment (54) is moulded to the back of a mirror support (37) for the mirror (21) and has an eye (53) in which the free end (52) of the transmission element (50) is held.

3. An exterior mirror according to claim 1, characterised in that the attachment is a hinge part (70) which is mounted so as to be movable on the back of a mirror support (37) for the mirror (21) and is secured so as to be capable of swivelling to the free end (68) of the transmission element (6) (sic).

4. An exterior mirror according to one of the preceding claims, characterised in that the transmission element (60) has a spherical bulge (61) which is held in a guide part (63) secured to the mirror housing (20) so as to be displaceable in the direction of the tilt axis (24) of the mirror housing (20) and rotatable.

5. An exterior mirror according to one of the preceding claims, characterised in that the fork of the transmission element (50, 60) engages around the flattened end of the lever (10) and is connected thereto by way of a hinge pin (51) extending transversely to the lever and to the transmission element (50, 60).

6. An exterior mirror according to one of the preceding claims, characterised in that the mirror (21) is secured to a mirror support (37) which is guided in at least one further fork (42, 43; 38, 39, 40, 41) relative to the mirror housing (20).

7. An exterior mirror according to claim 6, characterised in that the further fork (42, 43) projects from a retaining plate (34) secured to the mirror housing, in which a bracket (47, 48) secured to the mirror is guided.

8. An exterior mirror according to claim 6 or 7, characterised in that the further fork (40, 41) projects rearwards from the back of the mirror and the hinge ball (35) supporting the mirror (21, 37) has a journal (38, 39) protruding laterally and guided in the further fork.

9. An exterior mirror according to one of the preceding claims, characterised in that the lever (10) is guided in a slot.

## Revendications

1. Rétroviseur extérieur pour un véhicule avec un pied de rétroviseur (2) pouvant être fixé au véhicule et un boîtier de rétroviseur (20) qui est fixé au pied de rétroviseur (2) autour d'une articulation (15) rabattable à partir d'une position d'utilisation et porte un rétroviseur (21, 37) qui est pivotant autour de deux axes (22, 23) perpendiculaires l'un par rapport à l'autre, parallèles au rétroviseur, un mécanisme de réglage s'engageant sur le rétroviseur présentant un levier (10) monté mobile dans le pied de rétroviseur (2) et muni d'une manette (12, 13) pénétrant dans l'intérieur du véhicule, qui est relié articulé à un organe de transmission (50, 60) en forme de tige s'étendant à travers l'articulation (15) à l'intérieur du boîtier de rétroviseur (20) et fixé coulissant au rétroviseur à l'extérieur du point de jonction des axes, caractérisé en ce que l'extrémité du côté du pied de rétroviseur de l'organe de transmission (50, 60) entoure l'extrémité libre du levier (10) au moyen d'une fourche et en ce que l'extrémité du côté du boîtier de rétroviseur (52, 68) de l'organe de transmission (50, 60) est entourée d'une embase (54, 70) en forme de boule éloignée vers l'arrière par rapport au rétroviseur.

2. Rétroviseur extérieur selon la revendication 1, caractérisé en ce que l'embase (54) sur la face arrière d'un support de rétroviseur (37) est utilement formée pour le rétroviseur (21) et possède un oeil (53) dans lequel l'extrémité libre (52) de l'organe de transmission (50) est maintenue.

3. Rétroviseur extérieur selon la revendication 1, caractérisé en ce que l'embase est une pièce d'articulation (70) qui est maintenue mobile sur la face arrière d'un support de rétroviseur (37) et est fixée mobile pivotante sur l'extrémité libre (68) de l'organe de transmission (6).

4. Rétroviseur extérieur selon l'une des revendications précédentes, caractérisé en ce que l'organe de transmission (60) présente un renflement bombé (61) qui est maintenu coulissant et tournant dans une pièce de guidage (63) fixée au boîtier de rétroviseur (20) dans la direction de l'axe de rabattement (24) du boîtier de rétroviseur (20).

5. Rétroviseur extérieur selon l'une des revendications précédentes, caractérisé en ce que la fourche de l'organe de transmission (50, 60) enveloppe l'extrémité aplatie du levier (10) et peut être avantageusement reliée à celui-ci par l'intermédiaire d'une broche d'articulation (51) s'étendant transversalement par rapport au levier et à l'organe de transmission (50, 60).

6. Rétroviseur extérieur selon l'une des revendications précédentes, caractérisé en ce que le rétroviseur (21) est fixé à un support de rétroviseur (37) qui est introduit relativement au boîtier de rétroviseur (20) dans au moins une autre fourche (42, 43 ; 38, 39, 40, 41).

7. Rétroviseur extérieur selon la revendication 6, caractérisé en ce que l'autre fourche (42, 43) dépasse d'une plaque de maintien (34) fixée au boîtier de rétroviseur, dans laquelle est conduit un étrier (47, 48).

8. Rétroviseur extérieur selon la revendication 6 ou 7, caractérisé en ce que l'autre fourche (40, 41) dépasse vers l'arrière de la face arrière du rétroviseur et en ce que la boule d'articulation (35) supportant le rétroviseur (21, 37) présente un tourillon (38, 39) dépassant latéralement, introduit dans l'autre fourche.

9. Rétroviseur extérieur selon l'une des revendications précédentes, caractérisé en ce que le levier (10) est introduit dans une rainure.

Fig. 1

SCHNITT A-A

Fig. 2

Fig. 3

SCHNITT B-B

Fig. 4

Fig. 5

Schwenkbereich
allseitig 10°

20  42  18  30  38 34 35  39  33  23 67 64 68  63 65 66 3  9  2

11

27  37  48  40  41  47  43 71 72 73 77  70  19

SCHNITT  A-A

EP 0 278 014 B1

12

Fig.6

68 71 72 73 76 37 21 20 19 2

18

2

80

77

60

63

61

26 51 14 4 15

3

SCHNITT B-B